# EUROPÄISCHE PATENTSCHRIFT

(11) **EP 3 871 319 B1**
(45) Veröffentlichungstag und Bekanntmachung des Hinweises auf die Patenterteilung: **20.07.2022**
(21) Anmeldenummer: 18830181.6
(22) Anmeldetag: 13.12.2018
(51) Int. Cl.: H02K 3/30, H02K 3/34, H02K 15/10, H01F 27/32

(54) **ISOLIERUNG VON TEILLEITERN EINER DYNAMOELEKTRISCHEN MASCHINE**
ISOLATION OF SUB-CONDUCTORS OF A DYNAMOELECTRIC MACHINE
ISOLATION DES CONDUCTEURS PARTIELS D'UNE MACHINE DYNAMOÉLECTRIQUE

(30) Priorität: 20.12.2017 EP 17208914; 23.03.2018 EP 18163675
(43) Veröffentlichungstag der Anmeldung: 01.09.2021
(73) Patentinhaber: Flender GmbH, 46395 Bocholt (DE)
(72) Erfinder: BRENNER, Robin, 94148 Kirchham (DE); LÜTKE, Harry, 90409 Nürnberg (DE); SCHÖNBAUER, Norbert, 94072 Bad Füssing (DE)
(74) Vertreter: Michalski Hüttermann & Partner Patentanwälte mbB
(86) Internationale Anmeldenummer: PCT/EP2018/084667
(87) Internationale Veröffentlichungsnummer: WO 2019/121280

(56) Entgegenhaltungen:
- EP-A1- 3 043 356
- WO-A2-2005/015762
- CN-A- 104 092 324
- FR-A- 397 892
- JP-A- H04 125 910
- US-A- 1 118 446
- US-A1- 2014 028 140
- US-A1- 2014 190 002

## Beschreibung

Die Erfindung betrifft einen elektrischen Leiter mit Teilleitern, eine Spule mit Leitern, einen Stator einer dynamoelektrischen Maschine mit Spulen, eine dynamoelektrische Maschine mit einem Stator als auch Verfahren zur Herstellung von elektrischen Leitern, Spulen und Statoren von dynamoelektrischen Maschinen.

Bei dynamoelektrischen Maschinen, beispielsweise Elektromotoren oder Generatoren, sind die Wicklungssysteme aus einzelnen Spulen aufgebaut. Die Spulen weisen einen oder mehrere Leiter auf, die gegeneinander isoliert sind. Insbesondere müssen diese einzelnen Teilleiter eines Leiters eine sogenannte Windungsisolation aufweisen, die im Regelfall nur für vergleichsweise geringe Spannungen von maximal 80V ausgelegt ist. Eine derartige Teilleiterisolation erfolgt beispielsweise durch mit auf Leiter aufgebrachtem Isolierlack.

Die Teilleiter sind erfahrungsgemäß aus Kupfer oder Aluminium, wobei die Teilleiter mit Lack rundum isoliert sind. Alternativ können die Teilleiter auch eine rundum vorhandene Bandisolierung aufweisen.

Nachteilig dabei ist, dass bei Anordnung der Teilleiter der Leiter einer Spule in der Nut einer dynamoelektrischen Maschine sich die Windungsisolationen in ihrer Dicke gegenseitig aufsummieren und dadurch der verfügbare Kupferfüllfaktor in der Nut reduziert wird.

Aus der JP H04 125910 A1 ist ein elektrischer Leiter für ein Wicklungssystem einer dynamoelektrischen Maschine bekannt, der zwei oder mehrere Teilleiter aufweist, wobei diese Teilleiter voneinander isoliert sind, in dem die Teilleiter zu dem oder den benachbarten Teilleitern dieses Leiters lediglich eine Isolationsschicht aufweisen, wobei die Isolationsschicht entweder eine auf den Teilleiter geklebte Folie oder eine Lackisolierung ist. Dieser elektrische Leiter bildet den Oberbegriff des Anspruchs 1. Dieser Leiter hat einen hohen Kupferfüllfaktor, könnte aber bezüglich seiner mechanischen Belastbarkeit verbessert werden.

Ausgehend davon liegt der Erfindung die Aufgabe zugrunde, die mechanische Belastbarkeit eines Leiters, der aus Teilleitern besteht, zu erhöhen.

Die Lösung der gestellten Aufgabe gelingt durch einen elektrischen Leiter mit den Merkmalen des Anspruchs 1 oder der Ansprüche 2 bis 4.

Die Lösung der gestellten Aufgabe gelingt nach Anspruch 5 auch durch eine Spule eines Wicklungssystems einer elektrischen Maschine mit zumindest einem erfindungsgemäßen Leiter.

Die Lösung der gestellten Aufgabe gelingt auch durch einen Stator oder ein Statorsegment einer dynamoelektrischen Maschine nach Anspruch 6 oder Anspruch 7.

Die Lösung der gestellten Aufgabe gelingt nach Anspruch 8 auch durch eine dynamoelektrische Maschine mit einem erfindungsgemäßen Stator oder einem erfindungsgemäßen Statorsegment.

Die Lösung der gestellten Aufgabe gelingt auch durch ein Verfahren zur Herstellung eines elektrischen Leiters nach Anspruch 9 oder Anspruch 10.

Die Lösung der gestellten Aufgabe gelingt auch durch ein Verfahren zur Herstellung einer Spule aus erfindungsgemäßen Leitern nach Anspruch 11.

Die Lösung der gestellten Aufgabe gelingt auch durch ein Verfahren zur Herstellung eines Wicklungssystems eines Stators oder Statorsegments nach Anspruch 12.

Erfindungsgemäß werden nun die einzelnen Teilleiter eines Leiters in Umfangsrichtung betrachtet lediglich partiell isoliert. In dieser umfänglichen Betrachtung des Querschnitts des Teilleiters ist somit durch die Isolierung nur ein vorgebbarer Abschnitt bedeckt. Der einzelne Teilleiter weist also einen unbedeckten (blanken) und einen bedeckten (isolierten) Bereich auf.

Bei der Positionierung der Teilleiter eines Leiters befindet sich somit zwischen diesen Teilleitern erfindungsgemäß nur eine Isolationsschicht - also eine Teilleiterisolationsschicht. Blanke Seiten eines Teilleiters liegen an isolierten Seiten der direkt benachbarten Teilleiter, so dass zwischen den einzelnen Teilleitern immer eine Mindestisolation gegeben ist.

Durch die erfindungsgemäße Umspinnung der einzelnen Teilleiter mit einem Garngemisch oder Garn, insbesondere Polyester-Glasfasern oder Glasfasern erreicht man eine vergleichsweise höheren mechanische Belastbarkeit, z.B. beim Einlegen der Leiter oder des Wicklungssystems in eine Nut und ein vergleichsweise verbessertes Teilentladungsverhalten eines Wicklungssystems im Betrieb einer dynamoelektrischen Maschine. Des Weiteren kann dabei auch eine zusätzliche Fixierung dieser Isolation an dem oder den Teilleitern durch das Umspinnen der Teilleiter mit einer Bandage aus einem Garngemisch, insbesondere Polyester-Glasfasern erreicht werden. Die Bandage umgreift dabei in Umfangrichtung betrachtet den gesamten Teilleiter.

Ein Querschnitt eines Teilleiters weist also umfänglich betrachtet einen Abschnitt mit einer Isolationsschicht und einen Abschnitt ohne Isolation (blanke Seite) auf. Der gesamte Umfang des Teilleiters ist von einer Bandage aus Polyester-Glasfasern oder nur Glasfasern umgeben. Diese Bandage liegt somit zum einen auf der Isolation des Teilleiters als auch auf der blanken Seite des Teilleiters.

Aus Festigkeitsgründen kann zusätzlich der gesamte Leiter, also eine Gesamtheit der zwei oder mehreren Teilleitern ebenso mit einer Bandage aus verschiedenen Bandmaterialien umgeben sein, die dann die Hauptisolation des Leiters bilden.

Ebenso ist es möglich, dass nur die Teilleiter mit ihrer partiellen Isolation aufeinander geschichtet sind und/oder nur der gesamte Leiter u.a. aus Festigkeitsgründen mit einer Bandage aus einem oder verschiedenen Bandmaterialien, z.B. aus Polyester-Glasfasern umgeben ist.

Die Bandagen weist dabei grundsätzlich entweder parallele Fasern oder geflochtene Fasern auf.

Bei radial übereinander angeordneten Teilleitern in einer Nut eines Stators liegt somit jeweils eine blanke Seite eines zweiten Teilleiters auf einer Isolierung eines ersten Teilleiters usw., so dass zwischen den einzelnen Teilleitern immer eine Mindestisolation gegeben ist.

Vorteilhafterweise ist vor allem bei einer radialen Anordnung dieser Teilleiter in der Nut eines Stators oder eines Statorsegments und bei einem rechteckigen Querschnitt dieser Teilleiter lediglich die Oberseite oder die Unterseite der Teilleiter mit einer Isolierung zu versehen.

Die partielle Isolierung der Teilleiter erfolgt grundsätzlich als Bandisolierung oder als Lackisolierung.

Die Teilleiter weisen im Querschnitt, also umfängliche betrachtet in der Nut, nur eine teilweise Bedeckung durch die Teilleiterisolierung auf. Die Teilbedeckung beträgt ca. 30 bis 70% des Umfangs des Teilleiters - je nach Querschnittsform des Teilleiters.

Vorteilhaft ist es dabei, wenn diese Isolierung der Teilleiter noch über angrenzende Kantenradien dieser bedeckten Seiten der Teilleiter gezogen ist. Damit sind beispielsweise - im rechteckigen Querschnitt betrachtet - eine Seite des Teilleiters unbedeckt, eine Seite bedeckt und zwei Seiten jeweils zum Teil bedeckt.

Durch die erfindungsgemäße Ausgestaltung der Teilleiterisolierung reduziert sich das notwendige Volumen der Isolierung in der Nut bei gleichzeitiger Erhöhung des Kupferfüllfaktors oder Aluminiumfüllfaktors, also des elektrisch verfügbaren Leitungsquerschnitts.

Grundsätzlich weisen die Teilleiter einen vergleichsweise gut "stapelbaren" Querschnitt auf, es wird dabei vor allem eine im Wesentlichen rechteckförmige oder quadratische Querschnittsform der Teilleiter verwendet werden. Dies erhöht den Füllfaktor der elektrischen Leiter in den Nuten eines Stators oder Statorsegments.

Dabei sind die Kanten der Teilleiter vorteilhafterweise abgerundet, um die Teilleiterisolation nicht zu beschädigen und/oder lokale Feldstärkenmaxima zu vermeiden.

Innerhalb einer Nut sind die Teilleitern eines Leiters radial bzw. vertikal und/oder horizontal angeordnet. Als radial wird dabei die Anordnung der Teilleiter von einem Nutgrund in Richtung Luftspalt einer dynamoelektrischen Maschine verstanden. Während unter einer horizontalen Anordnung der Teilleiter eine bzgl. des Luftspaltes im Wesentlichen tangentiale Anordnung verstanden wird.

Bei Teilleitern mit rechteckiger Querschnittsform und insbesondere radialer Anordnung in einer Nut, bei der die Schmalseiten der Teilleiter aneinandergrenzen, wird die Teilbedeckung geringer sein, als bei einer Ausführung wo die Längsseiten eines rechteckförmigen Teilleiters über einander liegen.

Axial außerhalb der Nut, also im Bereich des Wickelkopfes eines Stators oder eines Statorsegments kann die Bedeckung und/oder die Anordnung der Teilleiter des Leiters wie in der Nut ausgeführt sein.

Aufgrund des, je nach Maschinentyp ausgeführten Wickelkopfdesigns ist es auch vorstellbar, im Wickelkopfbereich den Bedeckungsgrad der Teilleiter mit der Isolation und/oder die Dicke der Bandage, z.B. aus Polyester-Glasfasern, also die Anzahl der Lagen um den Teilleiter und/oder den Leiter anzupassen.

Die Isolation der Teilleiter bildet eine Abdeckung vorzugsweise eine Folie, insbesondere aus Polyimid, die mit einem (Schmelz-) Kleber, z.B. FEP (Fluorethylen-Propylen)versehen ist und an den Teilleitern positioniert, insbesondere verklebt ist.

Die Abdeckung, insbesondere die Folie, kann dabei koronabeständig ausgeführt sein, was beispielsweise durch dementsprechende Einlagerung geeigneter Partikel erfolgt. Beispielsweise sind dann die Partikel aus Glimmer mit einer Dicke im Bereich von einigen hundertstel mm ausgestaltet.

Durch Umspinnung der einzelnen Teilleiter mit einem Garngemisch oder Garn, insbesondere Polyester-Glasfasern oder Glasfasern erreicht man eine vergleichsweise höheren mechanische Belastbarkeit, z.B. beim Einlegen der Leiter oder des Wicklungssystems in eine Nut und ein vergleichsweise verbessertes Teilentladungsverhalten eines Wicklungssystems im Betrieb einer dynamoelektrischen Maschine. Des Weiteren kann dabei auch eine zusätzliche Fixierung dieser Isolation an dem oder den Teilleitern durch das Umspinnen der Teilleiter mit einer Bandage aus einem Garngemisch, insbesondere Polyester-Glasfasern erreicht werden. Die Bandage umgreift dabei in Umfangrichtung betrachtet den gesamten Teilleiter.

Diese Ausbildung der Teilleiter ist nicht nur auf die Bereiche in der Nut des Stators oder des Statorsegments beschränkt sondern kann darüber hinaus auch in den Wickelköpfen des Stators oder Statorsegments umgesetzt sein.

Die Polyester-Glasfasern weisen je nach Vorgabe zur Isolationsfestigkeit unterschiedliche Faser-Dicken und eine unterschiedliche Anzahl von Fasern auf. Der Anteil der Polyesterfasern sollte gewichtsmäßig nicht über 50% des Gesamtgewichts der Bandage betragen.

Die Umspinnung sollte aus Gründen der Verarbeitung und/oder des Teilentladungsverhaltens möglichst glatt und lückenlos sein. Die Umspinnung kann je nach mechanischer Anforderung ein- oder mehrlagig ausgeführt sein.

Die Polyesterfasern sind bevorzugterweise aus Polyethylenterephtalat, da diese die erforderliche Temperaturbeständigkeit im Betrieb einer dynamoelektrischen Maschine und/oder das erforderliche Schmelzverhalten während des Fertigungsprozesses der elektrischen Leiter und/oder der Spule aufweisen.

Aus einem oder mehreren derartigen Leitern werden Spulen eines Wicklungssystems eines Stators oder Statorsegments gebildet. Dabei wird die Formgebung der Spule durch konturgebende Körper vorgegeben, an die sich die Leiter anlegen. Durch die erfindungsgemäße Gestaltung der Leiter wird ein vergleichsweise erhöhter Kupferfüllfaktor in der Nut eines Stators oder Statorsegments erhalten. Das Wicklungssystem in der Nut des Stators oder des Statorsegments weist aber weiterhin grundsätzlich eine Nut- und Hauptisolation zu dem magnetisch leitfähigen Grundkörper, also z.B. dem Blechpaket und zu Spulen anderer Phasen im Nut- oder Wickelkopfbereich auf.

Die Erfindung sowie vorteilhafte Ausgestaltungen der Erfindung werden anhand eines Ausführungsbeispiels näher erläutert. Darin zeigt:
- FIG 1: eine prinzipielle dynamoelektrische Maschine,
- FIG 2: einen Nutquerschnitt einer Hochspannungsisolierung,
- FIG 3: eine Spule mit einzelnen Teilleitern,
- FIG 4: eine Detaildarstellung eines Teilleiters,
- FIG 5: eine weitere Spule mit Teilleitern,
- FIG 6: ein Ablaufdiagramm einer Fertigung einer Spule.

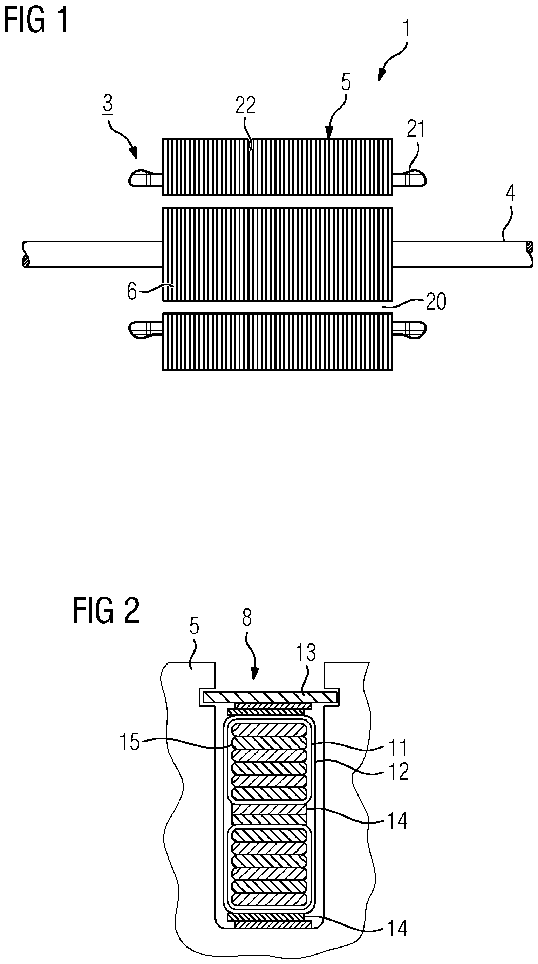

FIG 1 zeigt einen prinzipiellen Längsschnitt einer dynamoelektrischen Maschine 1 mit einem Stator 5, der durch einen Luftspalt 20 von einem Rotor 6 beabstandet ist, wobei der Rotor 6 mit einer Welle 4 drehfest verbunden ist und um eine Achse drehbar gelagert ist. Der Stator 5 kann auch in Umfangsrichtung betrachtet aus einzelnen aneinandergefügten Statorsegmenten aufgebaut sein.

Dem Luftspalt 20 zugewandt befindet sich im Stator 5 ein in nicht näher dargestellten Nuten 8 eines magnetisch leitfähigen Blechpakets 22 angeordnetes Wicklungssystem 3, das an den Stirnseiten des Stators 5 Wickelköpfe ausbildet.

Ein bisher bekanntes, beispielhaft dargestelltes Wicklungssystem gemäß FIG 2 weist in einer Nut 8 zwei Leiter 10 mit ihren Teilleiter 9 auf, wobei in diesem Fall eine Zweischichtwicklung vorliegt. Jede Schicht weist somit einen Leiter 10 mit Teilleitern 9 auf. Ein Nutfüllstoff 14 isoliert die Leiter 10 sowohl zum Nutgrund, als auch zwischen den beiden Leitern 10, ebenso wie zwischen dem obersten Leiter 10 und einem Nutverschlusskeil 13.

Jeder Teilleiter 9 weist dabei eine ihn umgebende Teilleiterisolierung 15 auf, die die vorhandene Windungsisolation übernimmt und die bei Hochspannungsmaschinen im Bereich für ca. 80 bis 100V auszulegen ist. Jeder Leiter 10 ist von einer Hauptisolierung 11 umgeben, wobei das gesamte Wicklungssystem in dieser Nut 8 von einer Nutisolation 11 gegenüber dem Blechpaket des Stators 5 ebenfalls isoliert ist.

Durch den beschriebenen Aufbau weist jede Teilleiterisolierung 15 Schichtdicken auf, die sich über die radiale Höhe des Leiters 10 in der Nut 8 summieren und so zu einem reduzierten Kupferfüllfaktor des Wicklungssystems 3 innerhalb der Nut 8 führen. Dies reduziert die Effizienz der dynamoelektrischen Maschine 1.

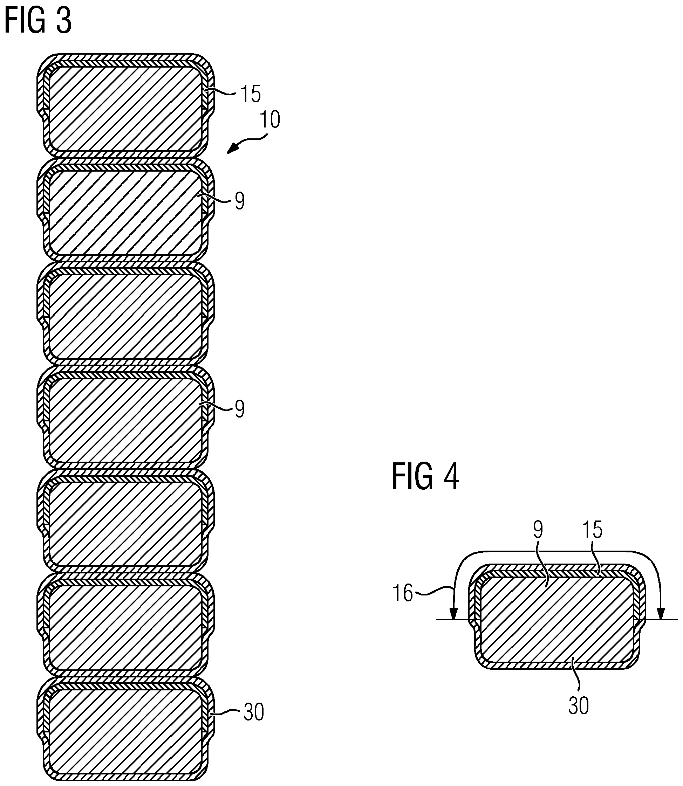

Erfindungsgemäß wird nunmehr gemäß FIG 3 bei einer Spule 21, die zumindest einen Leiter 10 aufweist und dessen Teilleiter 9 radial übereinander angeordnet sind, jeweils nur eine einseitige Teilleiterisolation 15 aufgebracht, so dass lediglich eine erforderliche Mindestisolation zwischen den einzelnen benachbarten Teilleitern 9 vorhanden ist.

FIG 4 zeigt in einer näheren Darstellung einen im Wesentlichen rechteckförmig geformten Teilleiter 9, der im Querschnitt betrachtet eine teilweise Bedeckung 16 durch eine Teilleiterisolierung 15 aufweist. Die Teilbedeckung beträgt ca. 30 bis 70% des Umfangs des Teilleiters 9 - je nach Querschnittsform der Teilleiter 9.

Mit anderen Worten: bei Teilleitern 9 mit rechteckiger Querschnittsform und insbesondere radialer Anordnung in der Nut 8, bei der die Schmalseiten der Teilleiter 9 aneinandergrenzen, wird die umfängliche Teilbedeckung geringer sein, als bei der Ausführung gemäß FIG 3, wo die Längsseiten der Teilleiter 9 aneinandergrenzen.

Die Isolation an den Teilleitern 9 ist vorzugsweise eine Folie, insbesondere aus Polyimid, die mit einem (Schmelz-) Kleber, z.B. FEP (Fluorethylen-Propylen)versehen ist und an den Teilleitern 9 positioniert, insbesondere verklebt ist.

Durch Umspinnung der einzelnen Teilleiter 9 mit einem Garngemisch oder Garn, insbesondere Polyester-Glasfasern oder Glasfasern erreicht man eine vergleichsweise höheren mechanische Belastbarkeit, z.B. beim Einlegen der Leiter oder des Wicklungssystems in eine Nut 8 und ein vergleichsweise verbessertes Teilentladungsverhalten eines Wicklungssystems 3 im Betrieb einer dynamoelektrischen Maschine 1.

Des Weiteren kann dabei auch eine zusätzliche Fixierung dieser Isolation an dem oder den Teilleitern 9 durch das Umspinnen der Teilleiter 9 mit einer Bandage 30 aus einem Garngemisch, insbesondere Polyester-Glasfasern erreicht werden. Die Bandage 30 umgreift dabei in Umfangrichtung betrachtet den gesamten Teilleiter 9. Dadurch wird auch eine zusätzliche Fixierung der Isolierung an den Teilleitern 9 gemäß FIG 3 und FIG 4 erreicht.

Die Bandage 30 aus Polyesterfaser und/oder Glasfasern umgreift in Umfangrichtung betrachtet den gesamten Teilleiter 9. Die Bandage 30 ist vorteilhafterweise nur einlagig ausgeführt um den Füllfaktor in der Nut 8 nicht zu beeinträchtigen.

Diese Ausbildung der Teilleiter 9 ist nicht nur auf die Bereiche in der Nut 8 des Stators 5 oder Statorsegments beschränkt, sondern auch darüber hinaus in den Wickelköpfen des Wicklungssystems 3 des Stators 5 oder Statorsegments.

Vorteilhafterweise weisen die Teilleiter 9 eine im Wesentlichen rechteckförmige oder quadratische Querschnittsfläche auf. Dabei sind die Kanten der Teilleiter 9 abgerundet, um die Teilleiterisolation 15 nicht zu beschädigen. Innerhalb einer Nut 8 eines Stators 5 einer dynamoelektrischen Maschine 1 sind die Teilleitern 9 eines Leiters 10 radial bzw. vertikal und/oder horizontal angeordnet.

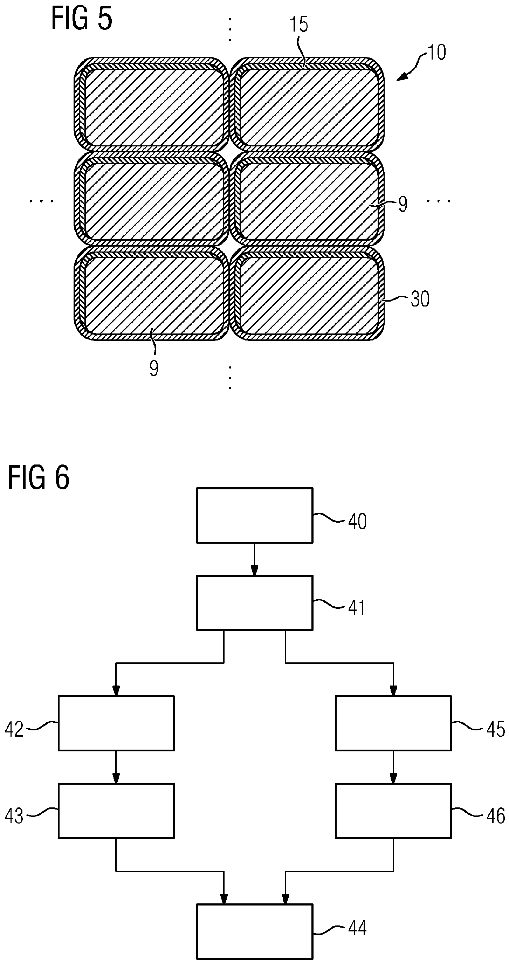

FIG 5 zeigt in einer weiteren Ausführung einen Leiter 10 mit horizontal und vertikal angeordneten Teilleitern 9. Es sind dabei - im Querschnitt betrachtet - zwei Seiten des rechteckförmigen Teilleiters 9 nahezu komplett oder komplett mit einer Teilleiterisolierung 15 versehen. Die an diese Teilleiterisolierung 15 angrenzenden Teilleiter 9 weisen auf diesen Seiten erfindungsgemäß keine Teilleiterisolierung 15 auf. Es ist jedoch - wie beispielsweise in FIG 3 oder FIG 4 dargestellt - eine Überdeckung der angrenzenden Kanten des jeweiligen Teilleiters 9 möglich.

Die Polyester-Glasfasern der Bandage 30 weisen je nach Vorgabe zur Isolationsfestigkeit unterschiedliche Faser-Dicken und eine unterschiedliche Anzahl von Fasern auf. Der Anteil der Polyesterfasern sollte gewichtsmäßig nicht über 50% des Gesamtgewichts der Bandage 30 betragen.

Die Umspinnung der Teilleiter 9 und/oder der Leiter 10 durch die Bandage 30 sollte möglichst glatt und lückenlos sein. Die Umspinnung kann je nach mechanischer Anforderung ein- oder auch mehrlagig ausgeführt sein.

Die Polyesterfasern sind bevorzugterweise aus Polyethylenterephtalat, da diese Fasern die erforderliche Temperaturbeständigkeit im Betrieb einer dynamoelektrischen Maschine 1 und/oder das erforderliche Schmelzverhalten während des Fertigungsprozesses der elektrischen Leiter 10 und/oder der Spule 21 aufweisen. Die Glasfasern sind dabei wegen des geringen Alkaligehaltes bevorzugt aus E-Glas.

Der erfindungsgemäße Gedanke zur Erhöhung der Füllfaktors der elektrischen Leiter 10 in einer Nut 8 durch partielle Teilleiterisolierung ist für Einschicht-, Zweischicht-, oder Mehrschichtwicklungen im Stator 5 oder Statorsegments einer dynamoelektrischen Maschine 1 geeignet.

Das Fertigungsverfahren einer Spule 21 weist nunmehr wie in FIG 6 prinzipiell dargestellt folgende Schritte auf:
Bereitstellen 40 eines blanken Teilleiters 9. Dieser Teilleiter 9 wird durch eine partielle Isolation gemäß Schritt 41 mit einer vorgebbaren Bedeckung 16 isoliert. Durch eine anschließende Umspinnung 42 mittels einer Bandage 30, wird die Isolierung 15 auf dem Teilleiter 9 zusätzlich umsponnen. Im Schritt 43 wird das Fasergemisch aus Polyesterfasern und Glasfasern erhitzt, so dass das Polyester schmilzt und so die Glasfasern mit dem vorhandenen Untergrund, also der Isolationsschicht 15 und/oder der Oberfläche des blanken Teilleiters 9 verklebt werden. Im Schritt 44 werden die Leiter 10 zu einer Spule 21 geformt, indem für die Formgebung der Spule 21 konturgebende Körper verwendet werden, an die sich die Leiter 10 anlegen. Imprägniert werden diese Teilleiter 9 dann mit der Hauptisolierung 11.

Alternativ dazu kann die Spule 21 gemäß FIG 6 auch folgendermaßen hergestellt werden:
Bereitstellen 40 eines blanken Teilleiters 9, Teilleiter 9 durch eine partielle Isolation gemäß Schritt 41 mit einer vorgebbaren Bedeckung 16 isolieren, Umspinnen dieser Teilleiter 9 mit einer Glasfaser-Bandage gemäß Schritt 45, anschließendes Imprägnierung der umsponnenen Teilleiter 9 mit Harz oder Lack und Aushärten gemäß Schritt 46, was zu einer Verklebung führt. Diese letztendlich gemäß Schritt 46 hergestellten Leiter 10 werden nunmehr ebenfalls zu einer Spule 21 gemäß Schritt 44 geformt, indem für die Formgebung dieser Spule 21 konturgebende Körper verwendet werden, an die sich die Leiter 10 anlegen.

Derartige Spulen 21 werden bei Wicklungssystemen 3 von dynamoelektrischen Maschinen 1, insbesondere Hochspannungsmaschinen beispielsweise im Bereich von Windkraftgeneratoren ein gesetzt. Durch den vergleichsweise erhöhten Kupfer- oder Aluminiumfüllfaktor der Leiter 10 in der Nut 8 eines Stators 5 oder Statorsegments steigert sich die Effizienz einer derartigen dynamoelektrischen Maschine 1.

## Patentansprüche

1. Elektrischer Leiter (10) für ein Wicklungssystem einer dynamoelektrischen Maschine, der zwei oder mehrere Teilleiter (9) aufweist, wobei diese Teilleiter (9) voneinander isoliert sind, indem eine Isolationsschicht auf jeden Teilleiter (9) dieses Leiters (10) partiell aufgebracht ist, so dass die Isolationsschicht in umfänglichen Betrachtung des Querschnitts des Teilleiters (9) nur ein vorgebbarer Abschnitt des Teilleiters (9) bedeckt, wobei die Teilleiter dieses Leiters (10) derart angeordnet sind, dass jeder Teilleiter (9) zu dem oder den benachbarten Teilleitern (9) dieses Leiters (10) lediglich die Isolationsschicht (15) aufweist, wobei die Isolationsschicht (15) entweder eine auf den Teilleiter (9) geklebte Folie oder eine Lackisolierung ist, **dadurch gekennzeich- net,** dass jeder Teilleiter (9) des elektrischen Leiters (10) mit der darauf aufgebrachten Isolationsschicht (15) mittels einer Bandage (30) aus Polyesterfasern und Glasfasern oder nur Glasfasern zusätzlich umsponnen wird, um eine höhere mechanische Belastbarkeit zu erreichen.

2. Elektrischer Leiter (10) für ein Wicklungssystem einer dynamoelektrischen Maschine nach Anspruch 1, **dadurch gekennzeichnet, dass** die Teilleiter (9) einen im Wesentlichen rechteckförmigen oder quadratischen Querschnitt aufweisen.

3. Elektrischer Leiter (10) für ein Wicklungssystem einer dynamoelektrischen Maschine nach Anspruch 1 oder 2, **da- durch gekennzeichnet**, dass der Teilleiter (9) im Querschnitt betrachtet über die angrenzenden Kantenradien der durch die Isolationsschicht (15) bedeckten Seite isoliert ist.

4. Elektrischer Leiter (10) für ein Wicklungssystem einer dynamoelektrischen Maschine nach einem der vorhergehenden Ansprüche, **dadurch gekennzeichnet, dass** die Bedeckung des Teilleiters (9) durch die Isolationsschicht im Querschnitt betrachtet zwischen 30 und 70% liegt.

5. Spule (21) eines Wicklungssystems (3) einer dynamoelektrischen Maschine mit zumindest einem Leiter (10) nach einem der vorhergehenden Ansprüche.

6. Stator (5) oder Statorsegment einer dynamoelektrischen Maschine (1) mit in Nuten (8) des Stators (5) oder Statorsegments angeordnetem Wicklungssystem (3), das pro Phase einzelne miteinander elektrisch kontaktierbare Spulen (21) nach Anspruch 5 aufweist.

7. Stator (5) oder Statorsegment nach Anspruch 6, **dadurch gekennzeichnet, dass** die Teilleiter (9) eines Leiters (10) zumindest in der Nut (8) des Stators (5) radial und/oder horizontal angeordnet sind.

8. Dynamoelektrische Maschine (1), insbesondere Hochspannungsmaschine mit einem Stator (5) oder Statorsegmenten nach einem der vorhergehenden Ansprüche 6 bis 7.

9. Verfahren zur Herstellung eines elektrischen Leiters (10), für ein Wicklungssystem einer dynamoelektrischen Maschine (1) durch folgende Schritte:
- Bereitstellen blanker Teilleiter (9),
- partielles Aufbringen einer Isolationsschicht (15) auf die Teilleiter (9),so dass die Isolationsschicht in umfänglichen Betrachtung des Querschnitts des Teilleiters (9) nur ein vorgebbarer Abschnitt des Teilleiters (9) bedeckt, insbesondere mit einer vorgebbaren Bedeckung des umfänglich betrachteten Teilleiters (9) von 30 bis 70%,
- anordnen der Teilleiter (9) dieses Leiters (10) derart, dass ein Teilleiter (9) zu dem oder den benachbarten Teilleitern (9) dieses Leiters (10) lediglich die Isolationsschicht (15) aufweist, wobei die Isolationsschicht (15) entweder eine auf den Teilleiter (9) geklebte Folie oder eine Lackisolierung ist,
- wobei jeder Teilleiter (9) des elektrischen Leiters (10) mit der darauf aufgebrachten Isolationsschicht (15) mittels einer Bandage (30) aus Polyesterfasern und Glasfasern zusätzlich umsponnen wird, um eine höhere mechanische Belastbarkeit zu erreichen,
- wobei ein Fasergemisch der Bandage aus Polyesterfasern und Glasfasern erhitzt wird, so dass das Polyester schmilzt und so die Glasfasern mit dem vorhandenen Untergrund, also der Isolationsschicht (15) oder der Oberfläche des blanken Teilleiters (9) verklebt.

10. Verfahren zur Herstellung eines elektrischen Leiters (10) für ein Wicklungssystem einer dynamoelektrischen Maschine (1) durch folgende Schritte:
- Bereitstellen blanker Teilleiter (9),
- partielles Aufbringen einer Isolationsschicht (15) auf die Teilleiter (9), so dass die Isolationsschicht in umfänglichen Betrachtung des Querschnitts des Teilleiters (9) nur ein vorgebbarer Abschnitt des Teilleiters (9) bedeckt, insbesondere mit einer vorgebbaren Bedeckung des umfänglich betrachteten Teilleiters (9) von 30 bis 70%,
- anordnen der Teilleiter (9) dieses Leiters (10) derart, dass ein Teilleiter (9) zu dem oder den benachbarten Teilleitern (9) dieses Leiters (10) lediglich die Isolationsschicht (15) aufweist, wobei die Isolationsschicht (15) entweder eine auf den Teilleiter (9) geklebte Folie oder eine Lackisolierung ist,
- wobei jeder Teilleiter (9) des elektrischen Leiters (10) mit der darauf aufgebrachten Isolationsschicht (15) mittels einer Bandage (30) aus Glasfasern zusätzlich umsponnen wird, um eine höhere mechanische Belastbarkeit zu erreichen,
- wobei die Teilleiter (9) und damit der Leiter (10) anschließend mit Harz oder Lack imprägniert wird und danach ausgehärtet wird.

11. Verfahren zur Herstellung einer Spule (21) aus Leitern (10) hergestellt gemäß Verfahren nach einem der Ansprüche 9 oder 10, wobei zur Formgebung der Spule (21) konturgebende Körper verwendet werden, an die sich die Leiter (10) anlegen.

12. Verfahren zur Herstellung eines Wicklungssystems (3) eines Stators (5) oder Statorsegments durch folgende Schritte:
- Bereitstellen eines magnetisch leitfähigen Grundkörpers, insbesondere Blechpaket (22), mit im Wesentlichen axial verlaufenden Nuten (8),
- einsetzen vorgefertigter Spulen (21) nach Anspruch 5 oder eines Leiters (10) nach einem der Ansprüche 1 bis 4 in diese Nuten (8) nach einem vorgebbaren Wicklungsschema um ein Wicklungssystem (3) des Stators (5) oder des Statorsegments zu erhalten,
- Imprägnieren des Wicklungssystems (3) in den Nuten (8).

## Claims

1. Electrical conductor (10) for a winding system of a dynamoelectric machine, said electric conductor comprising two or more sub-conductors (9), these sub-conductors (9) being insulated from one another by an insulation layer being partially applied to each sub-conductor (9) of this conductor (10), so that, when the cross section of the sub-conductor (9) is viewed in a circumferential direction, the insulation layer only covers a predeterminable portion of the sub-conductor (9), wherein the sub-conductors of this conductor (10) are arranged in such a way that each sub-conductor (9) only has the insulation layer (15) towards the adjacent sub-conductor or sub-conductors (9) of this conductor (10), wherein the insulation layer (15) is either a film bonded to the sub-conductor (9) or a varnish insulation, **characterized in that** each sub-conductor (9) of the electrical conductor (10) with the insulation layer (15) applied to it is additionally covered by means of a bandage (30) of polyester fibres and glass fibres or only glass fibres in order to achieve a greater mechanical load-bearing capacity.

2. Electrical conductor (10) for a winding system of a dynamoelectric machine according to Claim 1, **characterized in that** the sub-conductors (9) have a substantially rectangular or square cross section.

3. Electrical conductor (10) for a winding system of a dynamoelectric machine according to Claim 1 or 2, **characterized in that**, when viewed in cross section, the sub-conductor (9) is insulated over the adjacent edge radii of the side covered by the insulation layer (15).

4. Electrical conductor (10) for a winding system of a dynamoelectric machine according to one of the preceding claims, **characterized in that**, when viewed in cross section, the coverage of the sub-conductor (9) by the insulation layer lies between 30 and 70%.

5. Coil (21) of a winding system (3) of a dynamoelectric machine with at least one conductor (10) according to one of the preceding claims.

6. Stator (5) or stator element of a dynamoelectric machine (1) with a winding system (3) which is arranged in slots (8) of the stator (5) or stator segment and comprises for each phase individual coils (21) according to Claim 5 which can be brought into electrical contact with one another.

7. Stator (5) or stator segment according to Claim 6, **characterized in that** the sub-conductors (9) of a conductor (10) are arranged radially and/or horizontally at least in the slot (8) of the stator (5).

8. Dynamoelectric machine (1), in particular a high-voltage machine, with a stator (5) or stator segments according to either of the preceding Claims 6 and 7.

9. Method for producing an electrical conductor (10) for a winding system of a dynamoelectric machine (1) by the following steps:
- providing bare sub-conductors (9),
- partially applying an insulation layer (15) to the sub-conductors (9), so that, when the cross section of the sub-conductor (9) is viewed circumferentially, the insulation layer is only covered by a predetermined portion of the sub-conductor (9), in particular with a predetermined coverage of the circumferentially viewed sub-conductor (9) of 30 to 70%,
- arranging the sub-conductors (9) of this conductor (10) in such a way that each sub-conductor (9) only has the insulation layer (15) towards the adjacent sub-conductor or sub-conductors (9) of this conductor (10), wherein the insulation layer (15) is either a film bonded to the sub-conductor (9) or a varnish insulation,
- wherein each sub-conductor (9) of the electrical conductor (10) with the insulation layer (15) applied to it is additionally covered by means of a bandage (30) of polyester fibres and glass fibres in order to achieve a greater mechanical load-bearing capacity,
- wherein a fibre mixture of the bandage of polyester fibres and glass fibres is heated, so that the polyester melts and the glass fibres thus become adhesively bonded to the underlying surface present, that is to say the insulation layer (15) or the surface of the bare sub-conductor (9).

10. Method for producing an electrical conductor (10) for a winding system of a dynamoelectric machine (1) by the following steps:
- providing bare sub-conductors (9),
- partially applying an insulation layer (15) to the sub-conductors (9), so that, when the cross section of the sub-conductor (9) is viewed circumferentially, the insulation layer is only covered by a predetermined portion of the sub-conductor (9), in particular with a predetermined coverage of the circumferentially viewed sub-conductor (9) of 30 to 70%,
- arranging the sub-conductors (9) of this conductor (10) in such a way that each sub-conductor (9) only has the insulation layer (15) towards the adjacent sub-conductor or sub-conductors (9) of this conductor (10), wherein the insulation layer (15) is either a film bonded to the sub-conductor (9) or a varnish insulation,
- wherein each sub-conductor (9) of the electrical conductor (10) with the insulation layer (15) applied to it is additionally covered by means of a bandage (30) of glass fibres in order to achieve a greater mechanical load-bearing capacity,
- wherein the sub-conductors (9), and consequently the conductor (10), is/are subsequently impregnated with resin or varnish and then cured.

11. Method for producing a coil (21) from conductors (10) produced by the method according to either of Claims 9 and 10, wherein contouring bodies against which the conductors (10) come to lie are used for shaping the coil (21) .

12. Method for producing a winding system (3) of a stator (5) or stator segment by the following steps:
- providing a magnetically conductive main body, in particular a laminated core (22), with substantially axially extending slots (8),
- inserting prefabricated coils (21) according to Claim 5 or a conductor (10) according to one of Claims 1 to 4 into these slots (8) in accordance with a predeterminable winding pattern in order to obtain a winding system (3) of the stator (5) or of the stator segment,
- impregnating the winding system (3) in the slots (8).

## Revendications

1. Conducteur électrique (10) pour un système d'enroulement d'une machine dynamoélectrique, qui présente deux conducteurs partiels ou plus (9), ces conducteurs partiels (9) étant isolés les uns des autres par le fait qu'une couche d'isolation est partiellement appliquée sur chaque conducteur partiel (9) de ce conducteur (10), de telle sorte que la couche d'isolation recouvre seulement une section prédéterminable du conducteur partiel (9) en considérant sur sa circonférence la coupe transversale du conducteur partiel (9), les conducteurs partiels de ce conducteur (10) étant agencés de telle sorte que chaque conducteur partiel (9) présente uniquement la couche d'isolation (15) vers le ou les conducteurs partiels (9) voisins de ce conducteur (10), la couche d'isolation (15) étant soit un film collé sur le conducteur partiel (9), soit une isolation laquée, **caractérisé en ce que** chaque conducteur partiel (9) du conducteur électrique (10) avec la couche d'isolation (15) appliquée sur celui-ci est en outre enveloppé au moyen d'un bandage (30) en fibres de polyester et fibres de verre ou seulement en fibres de verre, afin d'atteindre une résistance mécanique plus élevée.

2. Conducteur électrique (10) pour un système d'enroulement d'une machine dynamoélectrique selon la revendication 1, **caractérisé en ce que** les conducteurs partiels (9) présentent une coupe transversale essentiellement rectangulaire ou carrée.

3. Conducteur électrique (10) pour un système d'enroulement d'une machine dynamoélectrique selon la revendication 1 ou 2, **caractérisé en ce que** le conducteur partiel (9), considéré en coupe transversale, est isolé sur les rayons de bord adjacents du côté recouvert par la couche d'isolation (15).

4. Conducteur électrique (10) pour un système d'enroulement d'une machine dynamoélectrique selon l'une quelconque des revendications précédentes, **caractérisé en ce que** le recouvrement du conducteur partiel (9) par la couche d'isolation, considéré en coupe transversale, est compris entre 30 et 70%.

5. Bobine (21) d'un système d'enroulement (3) d'une machine dynamoélectrique comprenant au moins un conducteur (10) selon l'une quelconque des revendications précédentes.

6. Stator (5) ou segment de stator d'une machine dynamoélectrique (1) comprenant un système d'enroulement (3) agencé dans des rainures (8) du stator (5) ou du segment de stator, qui présente par phase des bobines (21) individuelles pouvant être mises en contact électrique les unes avec les autres selon la revendication 5.

7. Stator (5) ou segment de stator selon la revendication 6, **caractérisé en ce que** les conducteurs partiels (9) d'un conducteur (10) sont agencés radialement et/ou horizontalement au moins dans la rainure (8) du stator (5).

8. Machine dynamoélectrique (1), notamment machine à haute tension comprenant un stator (5) ou des segments de stator selon l'une quelconque des revendications 6 à 7 précédentes.

9. Procédé de fabrication d'un conducteur électrique (10) pour un système d'enroulement d'une machine dynamoélectrique (1) par les étapes suivantes:
- la fourniture de conducteurs partiels nus (9),
- l'application partielle d'une couche d'isolation (15) sur les conducteurs partiels (9), de telle sorte que la couche d'isolation recouvre seulement une section prédéterminable du conducteur partiel (9) en considérant sur sa circonférence la coupe transversale du conducteur partiel (9), notamment avec un recouvrement prédéterminable du conducteur partiel (9) considéré sur sa circonférence de 30% à 70%,
- l'agencement des conducteurs partiels (9) de ce conducteur (10) de telle sorte qu'un conducteur partiel (9) présente uniquement la couche d'isolation (15) vers le ou les conducteurs partiels (9) voisins de ce conducteur (10), la couche d'isolation (15) étant soit un film collé sur le conducteur partiel (9), soit une isolation laquée,
- chaque conducteur partiel (9) du conducteur électrique (10) avec la couche d'isolation (15) appliquée sur celui-ci étant en outre enveloppé au moyen d'un bandage (30) en fibres de polyester et en fibres de verre afin d'atteindre une résistance mécanique plus élevée,
- un mélange de fibres du bandage en fibres de polyester et fibres de verre étant chauffé, de telle sorte que le polyester fond et que les fibres de verre sont collées au substrat présent, c'est-à-dire à la couche d'isolation (15) ou à la surface du conducteur partiel nu (9).

10. Procédé de fabrication d'un conducteur électrique (10) pour un système d'enroulement d'une machine dynamoélectrique (1) par les étapes suivantes:
- la fourniture de conducteurs partiels nus (9),
- l'application partielle d'une couche d'isolation (15) sur les conducteurs partiels (9), de telle sorte que la couche d'isolation recouvre seulement une section prédéterminable du conducteur partiel (9) en considérant sur sa circonférence la coupe transversale du conducteur partiel (9), notamment avec un recouvrement prédéterminable du conducteur partiel (9) considéré sur sa circonférence de 30% à 70%,
- l'agencement des conducteurs partiels (9) de ce conducteur (10) de telle sorte qu'un conducteur partiel (9) présente uniquement la couche d'isolation (15) vers le ou les conducteurs partiels (9) voisins de ce conducteur (10), la couche d'isolation (15) étant soit un film collé sur le conducteur partiel (9), soit une isolation laquée,
- chaque conducteur partiel (9) du conducteur électrique (10) avec la couche d'isolation (15) appliquée sur celui-ci étant en outre enveloppé au moyen d'un bandage (30) en fibres de verre, afin d'atteindre une résistance mécanique plus élevée,
- les conducteurs partiels (9) et donc le conducteur (10) étant ensuite imprégnés de résine ou de laque, puis durcis.

11. Procédé de fabrication d'une bobine (21) à partir de conducteurs (10) fabriqués par le procédé selon l'une quelconque des revendications 9 ou 10, des corps formant des contours, contre lesquels les conducteurs (10) s'appliquent, étant utilisés pour le façonnage de la bobine (21).

12. Procédé de fabrication d'un système d'enroulement (3) d'un stator (5) ou d'un segment de stator par les étapes suivantes:
- la fourniture d'un corps de base magnétiquement conducteur, notamment d'un paquet de tôles (22), comprenant des rainures (8) s'étendant essentiellement axialement,
- l'insertion de bobines préfabriquées (21) selon la revendication 5 ou d'un conducteur (10) selon l'une quelconque des revendications 1 à 4 dans ces rainures (8) selon un schéma d'enroulement prédéterminable pour obtenir un système d'enroulement (3) du stator (5) ou du segment de stator,
- l'imprégnation du système d'enroulement (3) dans les rainures (8).
